# EUROPEAN PATENT SPECIFICATION

(11) **EP 0 650 152 B1**
(45) Date of publication and mention of the grant of the patent: **29.04.1998**
(21) Application number: 94402375.3
(22) Date of filing: 21.10.1994
(51) Int. Cl.: G09B 19/02

(54) **Apparatus for repetitively learning a multiplication table**
Apparat zum wiederholenden Lernen des Einmaleins
Appareil pour apprendre répétitivement la table de multiplication

(30) Priority: 22.10.1993 KR 9321767
(43) Date of publication of application: 26.04.1995
(73) Proprietor: YEARIMDANG PUBLISHING CO., Ltd., Seoul (KR)
(72) Inventor: Cho, Eun-Young, Dongjak-ku, Seoul (KR)
(74) Representative: Orès, Bernard

(56) References cited:
- EP-A- 0 042 488
- GB-A- 2 127 200

## Description

The present invention relates to a multiplication table repeat learning apparatus for repetitively learning a multiplication table.

Generally, a multiplication table is necessarily used for the operation of numbers and is supposed to be learnt by heart.

In learning such a multiplication table, a conventional learning method has been performed by writing the multiplication table on a sheet of paper and repetitively looking at the same to memorize it.

Therefore, it was very inconvenient for a learner to see and memorize the written multiplication table in case of the multiplication table learning. Also, the learning efficiency was lowered.

In another conventional art to improve the learning efficiency, a sound of the multiplication table is recorded on a cassette tape and the cassette tape can be repetitively played back, thereby enabling the learner to learn the multiplication table while listening to the played-back sound thereof.

However, such a repetitive played-back method needs a separate expensive audio cassette tape recorder to play back an audio cassette tape on which the sound of the multiplication table has been recorded. Accordingly, it was an economical burden to the user. Also, when the palyback of the sound of the multiplication table has been completed, a rewind key should be depressed to rewind the audio cassette tape, and then a playback key should be depressed to play back the same, which causes the learner much inconvenience.

Further, when the learner wants to repetitively learn a desired portion of the multiplication table by playing back the sound of the multiplication table, a rewind key and a playback key should be repetitively depressed to find a desired portion of the cassette tape on which the sound of the desired portion of the multiplication table is recorded. Accordingly, it was very difficult and inconvenient for the repeat learning.

### SUMMARY OF THE INVENTION

Therefore, to solve the above problems, it is an object of the present invention to provide a multiplication table repeat learning apparatus for selectively outputting a sound of a desired portion of a multiplication table according to a learner's key manipulation, without using a separate cassette tape recorder.

To accomplish the above object of the present invetion, there is provided a multiplication table repeat learning apparatus comprising a sound memory integrate circuit device in which sounds of the respective multiplication table are separated into respective multiplier figure groups and stored, and whose input is connected to a selection key for selecting a respective multiplier figure group in the multiplication table and whose output is connected to an amplifier for amplifying a sound signal output from the sound memory integrate circuit device.

Therefore, according to the present invention, when a learner presses a selection key to select a desired multiplier figure group in the multiplication table, the sound memory integrate circuit device selects and outputs a sound of a selected multiplier figure group in the multiplication table, and the amplifier amplifies the selected sound and outputs the amplified sound, to thereby enable the learner to simply and repetitively play back a sound of the desired multiplier figure group in the multiplication table, and to listen to the played-back sound to learn the multiplication table by heart.

### BRIEF DESCRIPTION OF THE DRAWINGS

Figure is a circuit diagram showing a multiplication table learning apparatus according to the present invention.

### DETAILED DESCRIPTION OF THE PREFERRED EMBODIMENT

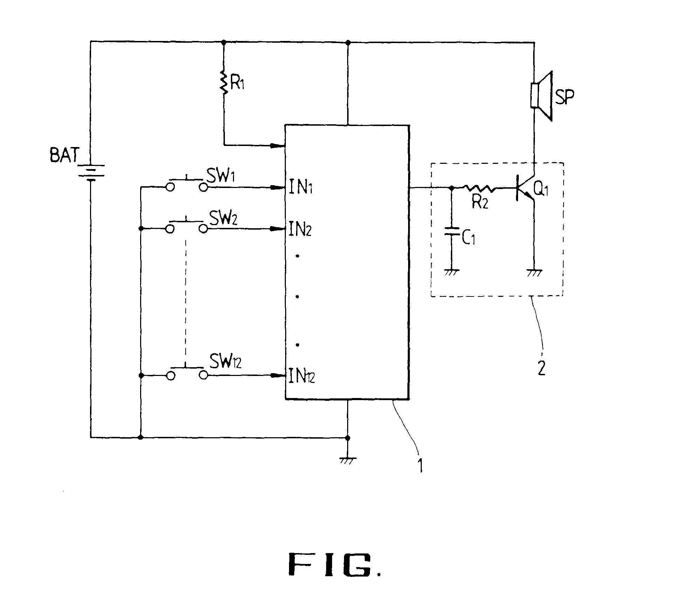

A preferred embodiment of the present invention will be described below in more detail with reference to the accompanying drawing.

In the accompanying drawing which shows a multiplication table repeat learning apparatus according to the present invention, a reference numeral 1 denotes a sound memory integrate circuit device, where sounds of the multiplication table are separated into a respective multiplier figure group, for example, the multiplier figure groups of two through twelve and the separated sounds are stored therein.

The reference symbols SW₁ through SW₁₂ are selection keys for respectively selecting the sounds of the stored multiplication table with respect to the multipliers of two through twelve. Each one end of selection keys SW₁ through SW₁₂ is commonly connected to the ground and the other ends are connected to input terminals IN₁ through IN₁₂ of sound memory integrate circuit device 1, respectively.

A reference numeral 2 denotes an amplifier for amplifying the sound of the multiplication table output from sound memory integrate circuit device 2 and outputting the amplified sound to a speaker SP. In Amplifier 2, a sound output end of sound memory integrate circuit device 1 is connected to a grounding capacitor C₁ and the connection point between sound memory integrate circuit device 1 and grounding capacitor C₁ is connected to a base electrode of a transistor Q₁ via a resistor R₂. Here, the collector electrode of transistor Q₁ is connected to speaker SP and the emitter electrode thereof is grounded.

A reference symbols BAT and R₁ in the drawing denote a power source and a resistor, respectively.

In the multiplication table repeat learning apparatus having the above construction, when the learner selectively depresses selection keys SW₁ through SW₁₂ at the power-on state, each of input ends IN₁ through IN₁₂ of sound memory integrate circuit device 1 is selectively applied with a low electric potential. Then, sound memory integrate circuit device 1 becomes to output a multiplication table sound selected according to a logical value of a low electric potential input end IN₁, or a logical value of the other input ends IN₂, IN₃, ..., IN₁₂ among the stored sounds of the multiplication table.

For example, if the user depresses selection key SW₁, sound memory integrate circuit device 1 selects a multiplication table sound of the multiplier of two among the stored multiplication table sounds, and outputs the selected sound. Also, if the user depresses selection key SW₂, sound memory integrate circuit device 1 selects a multiplication table sound of the multiplier of three among the stored multiplication table sounds, and outputs the selected sound. As described above, sound memory integrate circuit device 1 outputs a multiplication table sound selected according to a level value of a selected key SW₁ or a level value of the other non-selected keys SW₂. SW₃, ..., SW₁₂ among the stored sounds of the multiplication table.

Also, if any one of the selection keys is continuously depressed, sound memory integrate circuit device 1 continuously selects a multiplication table sound corresponding to the selected key and outputs the selected sound.

The multiplication table sound output from sound memory integrate circuit device 1 is input to amplifier 2, passes through resistor R₂. The multiplication table sound is amplified in transistor Q₁ and the amplified sound is output to speaker SP. Accordingly, the user can listen to the sound of the multiplication table to repetitively learn the multiplication table.

As described above, according to the present invention, the sounds of the multiplication table are separated into the sounds of the respective multipliers therein and the separated sounds are stored in the sound memory integrate circuit device. Then, the sound of the multiplier group which is selected from the multiplication table according to the user's selection key depression is output, to thereby enable the user to listen to a sound of a desired multiplier group in the multiplication table, and improve a learning efficiency of the multiplication table. Also, since a separate expensive cassette tape recorder need not be provided in this apparatus, an economical burden to the user can be reduced.

## Claims

1. A multiplication table repeat learning apparatus comprising:
a sound memory integrated circuit device (1) in which sounds of a multiplication table are separated into a respective sound of a plurality of multiplier groups, and the separated sounds are stored, thereby outputting a sound of a selected multiplier group;
a plurality of selection keys each of which outputs a selection signal according to a user's manipulation, to thereby enable the sound memory integrated circuit device to selectively output a sound of a selected multiplier group among a plurality of multiplier groups in the multiplication table; and
amplifier means (2) for amplifying the output signal of the sound memory integrated circuit device and outputting the amplified signal to a speaker.

2. A multiplication table repeat learning apparatus according to claim 1, wherein said amplifying means comprises a capacitor whose one end is connected to said sound memory integrate circuit device and the other end is grounded;
a resistor whose one end is connected to a connection point between said sound memory integrate circuit device and said capacitor; and
a transistor whose base is connected to the other end of said resistor, collector is connected to said speaker, and emitter is grounded.

## Patentansprüche

1. Gerät zum Lernen einer Multiplikationstabelle durch Wiederholung,
- mit einer integrierten Tonspeicherschaltung (1), in der Töne einer Multiplikationstabelle je in den Ton einer Mehrzahl von Multipliziergruppen getrennt sind, wobei diese getrennten Töne gespeichert sind und ein Ton einer ausgewählten Multipliziergruppe ausgegeben wird,
- mit mehreren Auswahltasten, die je ein Auswahlsignal entsprechend der Betätigung durch den Benutzer liefern und dadurch die integrierte Tonspeicherschaltung in die Lage versetzen, selektiv den Ton einer ausgewählten Multipliziergruppe unter einer Mehrzahl von Multipliziergruppen auszugeben,
- und mit Verstärkermitteln (2) zur Verstärkung des Ausgangssignals der integrierten Tonspeicherschaltung und zur Ausgabe des verstärkten Signals an einen Lautsprecher.

2. Gerät zum Lernen einer Multiplikationstabelle durch Wiederholung nach Anspruch 1, in dem die Verstärkermittel aufweisen:
- einen Kondensator, der mit einem Ende an die integrierte Tonspeicherschaltung und dem anderen Ende an Masse angeschlossen ist,
- einen Widerstand, der mit einem Ende am Verbindungspunkt zwischen der integrierten Tonspeicherschaltung und dem Kondensator liegt,
- und einen Transistor, dessen Basiselektrode mit dem anderen Ende des Widerstands, dessen Kollektorelektrode mit dem Lautsprecher und dessen Emitterelektrode mit Masse verbunden ist.

## Revendications

1. Appareil pour l'apprentissage répétitif de la table de multiplication, comprenant :
un dispositif à circuit intégré de mémoire de sons (1) dans lequel les sons d'une table de multiplication sont séparés en sons respectifs d'une pluralité de groupes correspondant à des multiplicateurs, et les sons séparés sont stockés, de manière à produire un son d'un groupe correspondant à un multiplicateur choisi ;
une pluralité de touches de sélection dont chacune produit un signal de sélection en fonction d'une action de l'utilisateur, pour activer ainsi le dispositif à circuit intégré de mémoire de sons afin de produire sélectivement un son d'un groupe correspondant à un multiplicateur choisi parmi une pluralité de groupes correspondant aux multiplicateurs dans la table de multiplication ; et
des moyens d'amplification (2) pour amplifier le signal de sortie du dispositif à circuit intégré de mémoire de sons et fournir le signal amplifié à un haut-parleur.

2. Appareil pour l'apprentissage répétitif de la table de multiplication suivant la revendication 1, dans lequel lesdits moyens d'amplification comprennent un condensateur dont une extrémité est connectée audit dispositif à circuit intégré de mémoire de sons et dont l'autre extrémité est reliée à la terre, une résistance dont une extrémité est connectée à un point de connexion entre ledit dispositif à circuit intégré de mémoire de sons et ledit condensateur, et un transistor dont la base est connectée à l'autre extrémité de ladite résistance, le collecteur est connecté audit haut-parleur, et l'émetteur est relié à la terre.
